# EUROPÄISCHE PATENTSCHRIFT

(11) **EP 1 761 986 B1**
(45) Veröffentlichungstag und Bekanntmachung des Hinweises auf die Patenterteilung: **20.03.2013**
(21) Anmeldenummer: 05754001.5
(22) Anmeldetag: 01.06.2005
(51) Int. Cl.: H02H 7/093, H02P 7/29

(54) **VERFAHREN UND VORRICHTUNG ZUR BLOCKIERERKENNUNG EINES GLEICHSTROMMOTORS**
METHOD AND DEVICE FOR DETECTING A BLOCKAGE OF A DC MOTOR
PROCEDE ET DISPOSITIF POUR DETECTER LE BLOCAGE D'UN MOTEUR A COURANT CONTINU

(30) Priorität: 22.06.2004 DE 102004030130
(43) Veröffentlichungstag der Anmeldung: 14.03.2007
(73) Patentinhaber: ROBERT BOSCH GMBH, 70442 Stuttgart (DE)
(72) Erfinder: KNAB, Norbert, 77767 Appenweier (DE); HABERL, Nikolas, 77886 Lauf (DE); FISCHER, Frank, 77815 Buehl Neusatz (DE); EICHHORN, Joerg, 77815 Buehl (DE)
(86) Internationale Anmeldenummer: PCT/EP2005/052498
(87) Internationale Veröffentlichungsnummer: WO 2005/124960

(56) Entgegenhaltungen:
- EP-A- 0 518 538
- DE-A1- 10 158 846
- GB-A- 2 342 517
- US-A1- 2003 210 011

## Beschreibung

### Stand der Technik

Die Erfindung betrifft ein Verfahren sowie eine verfahrensgemäße Verwendung einer vorrichtung zur Blockiererkennung eines Gleichstrommotors, insbesondere eines Gleichstrommotors für ein Gebläse eines Kraftfahrzeugs, nach der Gattung der unabhängigen Ansprüche.

Aus der DE A 10 40 847 ist ein Verfahren zur Überwachung und Ansteuerung eines elektronisch kommutierten Gleichstrommotors bekannt, bei dem der Lauf des Motors überwacht wird, indem eine Frequenz und/oder eine Spannung über einen Messwiderstand gemessen wird, die entweder dem von dem Motor aufgenommenen Strom oder der Frequenz entspricht. Im Falle einer Blockierung oder eines nicht ordnungsgemäßen Laufes des Motors wird ein Fehlersignal erzeugt, das ein Über- oder Unterschreiten vorgegebener Grenzwerte durch die gemessene Frequenz oder Spannung anzeigt. Um auch bei einer Blockierneigung oder bei Anlauffehlern des Motors ein Anlaufen des Motors mit hoher Sicherheit zu erreichen, wird bei Vorliegen eines Fehlersignals der Motor wiederholt ab- und eingeschaltet.

Weiterhin ist aus der EP-A-0 518 538 ein Regelsystem für einen elektrisch kommutierten GLeichstrommotor eines Beatmungsgerätes bekannt, mit dem die Geschwindigkeit des Motors anhand der vom Motor erzeugten induzierten Spannung (Back-EMF) überwacht wird. Zu diesem Zweck ist es vorgesehen, die Spannungsversorgung des Motors kurzzeitig in Intervallen zu unterbrechen. Darüber hinaus wird auch der Strom des Motors mittels der über einen in Reihe zu dem Motor geschalteten Widerstand abfallenden Spannung überwacht. Anhand der Überwachten Signale kann durch das Regelsystem ein nahezu konstante Durchfluss der Beatmungsluft auch bei einer zunehmenden Blockierung der Durchflussmenge infolge sich zusetzender Luftfilter sichergestellt werden.

Die US A-2003/0210011 zeigt ein Verfahren zur Detektion eines Rotorzustands eines Gleichstrommotors, wobei der Motor Teil einer Motorsteuercinheit mit einer zum Motor parallel geschalteten Freilaufdiode ist. Während der Freilaufphase des Motors erfolgt eine Blockiererkennung anhand der Back-EMF, wobei diese mittels eines Komparators mit einer Schwellwert-Spannung verglichen wird. Wird der Schwellwert unterschritten, erfolgt eine Abschaltung des Motors; bei. Überschreiten des Schwellwertes durch die Back-EMF wird der Gleichstrommotor wieder aktiviert.

### Vorteile der Erfindung

Gegenüber dem genannten Stand der Technik weist die Erfindung den Vorteil auf, dass eine zuverlässige Blockiererkennung eines Gleichstrommotors mit einem verhältnismäßig gering über dem maximal auftretenden Motorstrom liegenden Blockierstrom auch dann gewährleistet ist, wenn eine mit geringer Toleranz behaftete Strommessung durch kostenintensive Präzisionsbauteile bzw. deren aufwändigen Abgleich nicht sichergestellt werden kann oder soll. Zu diesem Zweck sind ein Verfahren sowie eine verfahrensgemäße Verwendung einer Vorrichtung zur Blockiererkennung eines Gleichstrommotors, insbesondere eines Gleichstrommotors für ein Gebläse eines Kraftfahrzeugs, vorgesehen, bei dem der Gleichstrommotor von einer Rechnereinheit mit Hilfe eines Schaltmittels für eine definierte zeitspanne deaktiviert wird. Innerhalb der definierten Zeitspanne wird dann an mindestens einem nachfolgenden Zeitpunkt eine induzierte Spannung des Gleichstrommotors gemessen und an die Rechnereinheit übergeben. Unterschreitet die gemessene, induzierte Spannung einen vorgegebenen Grenzwert, so bleibt der Gleichstrommotor deaktiviert. Wird der vorgegebene Grenzwert dagegen nicht von der induzierten Spannung unterschritten, so erfolgt eine erneute Aktivierung des Gleichstrommotors. Weiterhin ist vorgesehen, dass nach erneuter Aktivierung des Gleichstrommotors eine von einem Motorstrom abhängige und mittels einer Messvorrichtung gemessene Messgröße an die Rechnereinheit übergeben und in einen Speicher der Rechnereinheit als ein Referenzwert abgelegt wird. Während des Betriebs des Gleichstrommotors misst die Messvorrichtung nun die Messgröße und vergleicht diese mit dem zuvor abgespeicherten Referenzwert.

Ein weiterer Vorteil ergibt sich, wenn der Gleichstrommotor von der Rechnereinheit mit Hilfe des Schaltmittels erneut für die definierte Zeitspanne deaktiviert wird, sobald die gemessene Messgröße von dem zuvor in dem Speicher der Rechnereinheit abgelegten Referenzwert um mehr als einen festlegbaren Toleranzwert abweicht. Innerhalb der definierten Zeitspanne wird dann erneut die induzierte Spannung des Gleichstrommotors gemessen und an die Rechnereinheit übergeben, wobei der Gleichstrommotor deaktiviert bleibt, wenn die induzierte Spannung den vorgegebenen Schwellwert unterschreitet oder der Gleichstrommotor wieder aktiviert wird, wenn die induzierte Spannung den vorgegebenen Schwellwert nicht unterschreitet. Erfolgt eine erneute Aktivierung des Gleichstrommotors, wird der beschriebene Messvorgang solange fortwährend wiederholt, bis eine endgültige Deaktivierung des Gleichstrommotors - beispielsweise durch Abschalten des Gebläses des Kraftfahrzeugs oder im Falle einer erkannten Blockierung - erfolgt. Das erfindungsgemäße Verfahren eignet sich damit insbesondere für eine Verwendung der erfindungsgemäßen Vorrichtung bei verhältnismäßig großen Toleranzen bezüglich des maximalen Motorstroms und des minimalen Blockierstroms infolge kostengünstiger Bauelemente und erfordert zudem keine Schwellwertanpassung für unterschiedliche Applikationen.

In vorteilhafter Weise ist vorgesehen, dass der in den Speicher der Rechnereinheit abgelegte Referenzwert in Abhängigkeit von einer sich auf den Motorstrom auswirkenden Einflussgröße - beispielsweise einer Motorversorgungsspannung und/oder einer Umgebungstemperatur - nachgeführt wird. Damit kann verhindert werden, dass zum Beispiel bei versorgungsspannungsbedingten Stromänderungen eine unnötige Deaktivierung des Gleichstrommotors für die definierte Zeitspanne und demzufolge eine unnötige Belastung der Rechnereinheit und/oder des Schaltmittels erfolgt.

Weitere Vorteile der Erfindung ergeben sich durch die in den abhängigen Ansprüchen angegebenen Merkmale sowie aus der Zeichnung und der nachfolgenden Beschreibung.

### Zeichnung

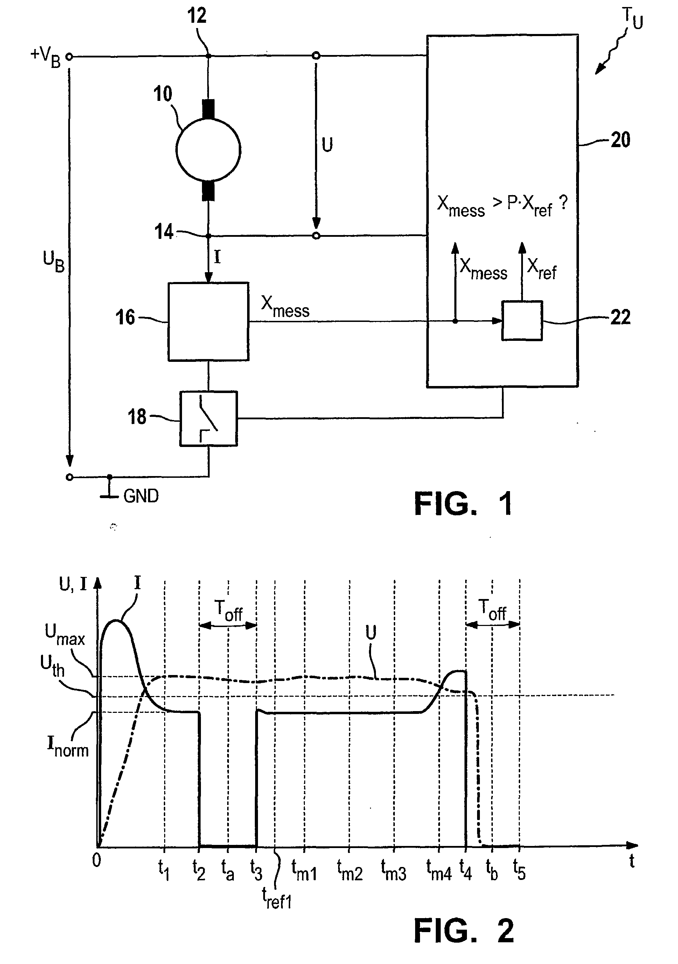

Die Erfindung wird im Folgenden anhand der Figuren 1 und 2 beispielhaft erläutert. Es zeigen
Fig. 1: ein Blockschaltbild der erfindungsgemäßen Vorrichtung für eine Verwendung des erfindungsgemäßen Verfahrens zur Blockiererkennung eines Gleichstrommotors,
Fig. 2: ein Diagramm des zeitlichen Verlaufs der induzierten Spannung und des Motorstromes.

### Beschreibung

Figur 1 zeigt ein Blockschaltbild der erfindungsgemäßen Vorrichtung zur Blockiererkennung eines Gleichstrommotors 10, wobei der Gleichstrommotor 10 Bestandteil eines nichtgezeigten Gebläses eines Kraftfahrzeugs sein kann. Über einen ersten Kontaktpunkt 12 ist der Gleichstrommotor 10 zum Einen elektrisch leitend mit einem positiven Versorgungspotential +V_{B} verbunden. Zum Anderen besteht eine Verbindung des Gleichstrommotors 10 über einen zweiten Kontaktpunkt 14 mit einer Messvorrichtung 16 und einem Schaltmittel 18, das wiederum unmittelbar mit einem Massepotential GND verbunden ist. Somit fällt über der gesamten, sich aus Gleichstrommotor 10, Messvorrichtung 16 und Schaltmittel 18 zusammensetzenden Serienschaltung eine Motorversorgungsspannung U_{B} ab, die beispielsweise durch eine nicht dargestellte Batterie des Kraftfahrzeugs zur Verfügung gestellt wird.

Die Messvorrichtung 16 ist beispielsweise in Form eines bei gesteuerten Gleichstrommotoren üblicherweise verwendeten Vorwiderstandes ausgebildet und liefert eine Messgröße Xₘₑₛₛ, die einem Motorstrom I entspricht, der wiederum proportional zu der über dem Vorwiderstand abfallenden Spannung ist. Alternativ kann die Messvorrichtung 16 auch durch einen Leiterstreifen, einen Shunt, einen Stromsensor oder dergleichen realisiert sein, wobei die Messgröße Xₘₑₛₛ nicht zwangsläufig dem Motorstrom I entsprechen muss, sondern beispielsweise auch direkt als Spannungswert vorliegen kann. Für die folgende Beschreibung des Ausführungsbeispiels soll jedoch davon ausgegangen werden, dass die Messgröße Xₘₑₛₛ den Motorstrom I repräsentiert. Das Schaltmittel 18 besteht beispielsweise aus einem MOSFET, kann aber auch als Bipolartransistor, Relais oder dergleichen ausgebildet sein.

Über die Kontaktpunkte 12 und 14 ist der Gleichstrommotor 10 mit einer Rechnereinheit 20 zur Messung einer vom Gleichstrommotor 10 erzeugten, induzierten Spannung U verschaltet, die direkt proportional zu der Drehzahl des Gleichstrommotors 10 ist. Weiterhin ist die Rechnereinheit 20 mit der Messvorrichtung 16 und dem Schaltmittel 18 verbunden, so dass zum Einen die von der Messvorrichtung 16 gelieferte Messgröße Xₘₑₛₛ als ein Referenzwert X_{ref} in einem Speicher 22 der Rechnereinheit 20 abgelegt werden kann und zum Anderen eine Aktivierung oder Deaktivierung des Gleichstrommotors 10 durch die Rechnereinheit 20 mittels des Schaltmittels 18 möglich ist. In der Regel ist die Rechnereinheit als Mikroprozessor ausgeführt. Alternativ kann aber auch ein DSP, ein ASIC oder ein sonstiger integrierter oder diskret aufgebauter Schaltkreis verwendet werden.

Anhand von Figur 2 soll nun das erfindungsgemäße Verfahren zur Blockiererkennung des Gleichstrommotors 10 erläutert werden. Dargestellt ist ein Diagramm, in dem die induzierte Spannung U und der Motorstrom I in Abhängigkeit von der Zeit t aufgetragen sind. Eine Aktivierung des Gleichstrommotors 10 ab dem Zeitpunkt t = 0 erfolgt beispielsweise durch Einschalten des Gebläses. Innerhalb der Hochlaufphase (0 < t < t₁) des Gleichstrommotors 10 steigt der Motorstrom I zunächst deutlich über einen Motorstromnormwert Iₙₒᵣₘ an, um dann zum Zeitpunkt t₁ auf den Motorstromnormwert Iₙₒᵣₘ abzufallen. Die induzierte Spannung U des Gleichstrommotors 10 steigt in diesem Zeitabschnitt proportional der Drehzahl des Gleichstrommotors 10 bis auf einen Maximalspannungswert Uₘₐₓ an. Üblicherweise beträgt die Zeitspanne der Hochlaufphase (0 < t < t₁) eines Gebläse-Gleichstrommotors ca. 3 Sekunden. Je nach Anwendung des Gleichstrommotors 10 kann die Hochlaufphase aber auch deutlich kürzer oder länger ausfallen.

Nach Beendigung der Hochlaufphase (0 < t < t₁) wird der Gleichstrommotor 10 zu einem Zeitpunkt t₂ ≥ t₁ von der Rechnereinheit 20 mit Hilfe des Schaltmittels 18 bis zu einem Zeitpunkt t₃ für eine definierte Zeitspanne T_{off} deaktiviert, wobei im Falle einer nicht vorhandenen Blockierung der Motorstrom I innerhalb weniger Millisekunden - in der Regel innerhalb 1 ms - auf den Wert Null absinkt. Aufgrund eines sich infolge der Massenträgheit weiterdrehenden, aber in Figur 1 nicht gezeigten Lüfters des Gebläses behält der Gleichstrommotor 10 in etwa seine Drehzahl bei, so dass die induzierte Spannung U nur geringfügig abfällt.

Innerhalb der definierten Zeitspanne T_{off} wird nun an mindestens einem nachfolgenden Zeitpunkt tₐ die induzierte Spannung U des Gleichstrommotors 10 gemessen und an die Rechnereinheit 20 über die beiden Knotenpunkte 12 und 14 übergeben. Ergibt die Messung - wie in Figur 2 gezeigt -, dass die induzierte Spannung U einen vorgegebenen Schwellwert Uₜₕ nicht unterschreitet, so wird der Gleichstrommotor 10 zum Zeitpunkt t₃, d.h. nach Beendigung der definierten Zeitspanne T_{off}, durch Schließen des Schaltmittels 18 wieder aktiviert. Liegt die gemessene, induzierte Spannung U dagegen unterhalb des vorgegebenen Schwellwertes Uₜₕ, so bleibt der Gleichstrommotor 10 auch nach der definierten Zeitspanne T_{off} deaktiviert. In Figur 2 wird jedoch davon ausgegangen, dass zunächst keine Blockierung vorliegt, so dass eine erneute Aktivierung des Gleichstrommotors 10 zum Zeitpunkt t₃ erfolgt. Da der Gleichstrommotor 10 zum Zeitpunkt t₃ immer noch die nahezu gleiche Drehzahl aufweist, wie zu Beginn der definierten Zeitspanne T_{off}, und somit die induzierte Spannung U ihren Maximalspannungswert Uₘₐₓ nur unwesentlich unterschritten hat, kommt es bei der erneuten Aktivierung des Gleichstrommotors 10 zum Zeitpunkt t₃ nur zu einer unwesentlichen Erhöhung des Motorstroms I über den Motorstromnormwert Iₙₒᵣₘ hinaus.

Innerhalb der definierten Zeitspanne T_{off} kann die induzierte Spannung U beliebig oft gemessen werden. Da die definierte Zeitspanne T_{off} jedoch in der Regel lediglich zwischen 10 und 100 ms andauert, wobei durchaus deutlich geringere oder höhere Werte möglich sind, erfolgt die Messung der induzierten Spannung U üblicherweise an einem oder an verhältnismäßig wenigen, nachfolgenden Zeitpunkten. Je nach Erfordernis kann jedoch auch durchaus eine Vielzahl von Messzeitpunkten gewählt werden.

Nach erneuter Aktivierung des Gleichstrommotors 10 zum Zeitpunkt t₃, d.h. im Falle einer nicht vorliegenden Blockierung, wird nun während des Betriebs des Gleichstrommotors 10 zu einem ersten Referenzzeitpunkt t_{refl} ≥ t₃ von der Messvorrichtung 16 die Messgröße Xₘₑₛₛ in Gestalt des Motorstroms I eingelesen und als Referenzwert X_{ref} an die Rechnereinheit 20 zur Ablage in dem Speicher 22 übergeben. Im Anschluss hieran erfolgt dann zu den bestimmten Messzeitpunkten t_{m1,} tₘ₂, tₘ₃, tₘ₄ eine jeweilige Messung der Messgröße Xₘₑₛₛ durch die Messvorrichtung 16. Ergibt sich dabei beispielsweise aufgrund einer Schwergängigkeit des Gleichstrommotors 10, dass die zum Messzeitpunkt tₘ₄ gemessenen Messgröße Xₘₑₛₛ (in diesem Fall also der Motorstrom I) um mehr als einen vorgebbaren Toleranzwert von dem zum ersten Referenzzeitpunkt t_{ref1} abgespeicherten Referenzwert X_{ref} abweicht - d.h. für den Fall, dass der vorgebbare Toleranzwert ein Faktor P ist, gilt beispielsweise die Beziehung Xₘₑₛₛ > P · X_{ref} - so erfolgt zum Zeitpunkt t₄ ≥ tₘ₄ mittels des durch die Rechnereinheit 20 angesteuerten Schaltmittels 18 erneut eine Deaktivierung des Gleichstrommotors 10 für die definierte Zeitspanne T_{off}. Dabei ergibt sich der Faktor P im Falle der Messung des Motorstroms I sinnigerweise zu P > 1, da eine Schwergängigkeit oder Blockierung des Gleichstrommotors 10 stets zu einer Erhöhung des Motorstroms I über den Motorstromnormwert Iₙₒᵣₘ führt. Für das gezeigte Ausführungsbeispiel wird zum Beispiel ein Faktor P = 1,2 angenommen, d.h. der maximale auftretende Motorstrom I darf um nicht mehr als 20% über dem Motorstromnormwert Iₙₒᵣₘ liegen. Wird dagegen nicht der Motorstrom I sondern ein anderer Wert als Messgröße Xₘₑₛₛ gemessen, so kann es auch erforderlich sein, die Beziehung Xₘₑₛₛ < P · X_{ref} zugrunde zu legen. In diesem Fall gilt für den Faktor P < 1. Alternativ ist es möglich, den vorgebbaren Toleranzwert statt als Faktor P auch als Summand bzw. Offset mit in Abhängigkeit von der gemessenen Messgröße Xₘₑₛₛ positivem oder negativem Vorzeichen vorzusehen.

Innerhalb der definierten Zeitspanne T_{off} wird dann an mindestens einem nachfolgenden Zeitpunkt t_{b} erneut die induzierte Spannung U des Gleichstrommotors 10 gemessen und über die beiden Knotenpunkte 12 und 14 an die Rechnereinheit 20 übergeben. Wird nun - wie in Figur 2 gezeigt - eine Blockierung des Gleichstrommotors 10 festgestellt, da die induzierte Spannung U nach der Deaktivierung des Gleichstrommotors 10 den vorgegebenen Schwellwert Uₜₕ zum Zeitpunkt t_{b} unterschritten hat, so bleibt der Gleichstrommotor auch über den Endzeitpunkt t₅ der definierten Zeitspanne T_{off} hinaus deaktiviert. Zeigt sich jedoch, dass die induzierte Spannung U zum Zeitpunkt t_{b} nicht den Schwellwert Uₜₕ unterschreitet, so wird der Gleichstrommotor 10 im Anschluss an die definierte Zeitspanne T_{off} von der Rechnereinheit 20 mittels des Schaltmittels 18 zum Zeitpunkt t₅ wieder aktiviert und zu einem zweiten Referenzzeitpunkt t_{ref2} ≥ t₅ ein neuer Referenzwert X_{ref} in den Speicher 22 der Rechnereinheit 20 abgelegt (in Figur 2 nicht gezeigt). Anschließend wird der beschriebene Messvorgang fortwährend solange wiederholt, bis eine endgültige Deaktivierung des Gleichstrommotors 10, beispielsweise durch Abschalten des Gebläses oder im Falle einer erkannten Blockierung, erfolgt.

Alternativ zum Referenzwert X_{ref} kann zu den Referenzzeitpunkten t_{ref1}, t_{ref2} auch direkt der mit dem Faktor P multiplizierte Referenzwert P · X_{ref} in dem Speicher 22 der Rechnereinheit 20 abgelegt werden.

Für das erfindungsgemäße Verfahren gemäß Figur 2 ist es vorgesehen, dass die bestimmten Messzeitpunkte tₘ₁, tₘ₂, tₘ₃, tₘ₄ regelmäßige Abstände aufweisen. So kann z.B. eine Messung der Messgröße Xₘₑₛₛ alle 5 Sekunden erfolgen. Ebenso kann aber auch ein deutlich kürzeres (z.B. 10 ms) oder längeres Messintervall (z.B. 1 Minute) vorteilhaft sein, je nachdem ob es eher auf eine möglichst rasche Erfassung von Unregelmäßigkeiten oder auf eine Entlastung der Rechnereinheit 20 ankommt. Alternativ ist es aber auch möglich, die bestimmten Messzeitpunkte tₘ₁, tₘ₂, tₘ₃, tₘ₄ willkürlich, d.h. nicht äquidistant, zu wählen. So ist es zum Beispiel denkbar, unmittelbar nach den Referenzzeitpunkten t_{ref1}, t_{ref2} kürzere Abstände zwischen den Messzeitpunkten tₘ₁, tₘ₂, tₘ₃, tₘ₄ zu wählen, die dann mit längerer Laufzeit des Gleichstrommotors 10 linear oder nicht-linear zunehmen. Statt diskreter Messzeitpunkte tₘ₁, tₘ₂, tₘ₃, tₘ₄ kann zudem auch eine kontinuierliche Messung der Messgröße Xₘₑₛₛ sowie deren Übergabe an die Rechnereinheit 20 erfolgen, wobei dann die Rechnereinheit 20 eine zeitliche Diskretisierung der Messgröße Xₘₑₛₛ, beispielsweise zu den Messzeitpunkten tₘ₁, tₘ₂, tₘ₃, tₘ₄, für den Vergleich mit dem toleranzbehafteten Referenzwert P · X_{ref} vornimmt.

Um darüber hinaus störende Einflüsse des Messvorgangs, wie z.B. Schwankungen der Motorversorgungsspannung U_{B} und/oder einer Umgebungstemperatur T_{U}, berücksichtigen zu können, kann zudem vorgesehen sein, den Referenzwert X_{ref} in Abhängigkeit von diesen sich auf den Motorstrom I auswirkenden Größen nachzuführen.

Es sei abschließend noch darauf hingewiesen, dass das gezeigte Ausführungsbeispiel weder auf die Figuren 1 und 2 noch auf die genannten Werte für die bestimmten Messzeitpunkte tₘ₁, tₘ₂, tₘ₃, tₘ₄, die definierte Zeitspanne T_{off}, die Dauer der Hochlaufphase, den Faktor P oder sonstiger, genannter Größen beschränkt ist. Ebenso ist es auch möglich, die zu den Zeitpunkten t₂ und t₄ beginnenden, definierten Zeitspannen T_{off} unterschiedlich lang zu wählen, um auf diese Weise zum Beispiel eine optimierte Anpassung an einen veränderten Drehzahlverlauf des Gleichstrommotors 10 zu ermöglichen.

## Patentansprüche

1. Vorfahren zur Blockiererkennung eines Gleichstrommotors (10), insbesondere eines Gleichstrommotors (10) für ein Gebläse eines Kraftfahrzeugs, wobei der Gleichstrommotor (10) von einer Rechnereinheit (20) mit Hilfe eines Schaltmittels (18) für eine definierte Zeitspanne (T_{off}) deaktiviert wird, innerhalb der definierten Zeitspanne (T_{off}) an mindestens einem nachfolgenden Zeitpunkt (tₐ, t_{b}) eine induzierte Spannung (U) des Gleichstrommotors (10) gemessen und an die Rechnereinheit (20) übergeben wird und der Gleichstrommotor (10) deaktiviert bleibt, wenn die induzierte Spannung (U) einen vorgegebenen Schwellwert (Uₜₕ) unterschreitet oder der Gleichstrommotor (10) wieder aktiviert wird, wenn die induzierte Spannung (U) des Gleichstrommolors (10) den vorgegebenen Schwellwert (Uₜₕ) nicht unterschreitet, **dadurch gekennzeichnet, dass** nach erneuter Aktivierung des Gleichstrommotors (10) eine von einem Motorstrom (I) abhängige und mittels einer Messvorrichtung (16) gemessene Messgröße (Xₘₑₛₛ) an die Rechnereinheit (20) übergeben und in einem Speicher (22) der Rechnereinheit (20) als ein Referenzwert (Xᵣₑₜ) abgelegt wird.

2. verfahren nach Anspruch 1, **dadurch gekennzeichnet, dass** die Messvorrichtung (16) die Messgröße (Xₘₑₛₛ) während des Betriebs des Gleichstrommotors (10) misst und an die Rechnereinheit (20) für einen vergleich mit dem in den Speicher (22) abgelegten Referenzwert (X_{ref}) übergibt.

3. Verfahren nach Anspruch 2, **dadurch gekennzeichnet, dass** der Gleichstrommotor (10) von der Rechnereinheit (20) mit Hilfe des Schaltmittels (18) erneut für die definierte Zeitspanne (T_{off}) deaktiviert wird, wenn die gemessene Messgröße (Xₘₑₛₛ) von dem zuvor in dem Speicher (22) der Rechnereinheit (20) abgelegten Referenzwert (X_{ref}) um mehr als einen festlegbaren Toleranzwert abweicht, innerhalb der definierten Zeitspanne (T_{off}) zu einem nachfolgenden Zeitpunkt (tₕ) erneut die induzierte Spannung (U) des Gleichstrommotors (10) gemessen und an die Rechnereinheit (20) übergeben wird und der Gleichstrommotor (10) deaktiviert bleibt, wenn die gemessene, induzierte Spannung (U) den vorgegebenen Schwellwert (Uₜₕ) unterschreitet oder der Gleichstrommotor (10) wieder aktiviert wird, wenn die gemessene, induzierte Spannung (U) den vorgegebenen Schwellwert (Uₜₕ) nicht unterschreitet, so dass der beschriebene Messvorgang fortwährend wiederholt werden kann.

4. Verfahren nach Anspruch 3, **dadurch gekennzeichnet, dass** der festlegbare Toleranzwert ein Faktor (P) ist.

5. Verfahren nach einem der Ansprüche 2 oder 3, **dadurch gekennzeichnet, dass** die Messgröße (Xₘₑₛₛ) zu bestimmten Messzeitpunkten (tₘ₁, tₘ₂, tₘ₃, tₘ₄) gemessen und an die Rechnereinheit (20) übergeben wird.

6. Verfahren nach Anspruch 5, dadurch gekennzeichet, dass die bestimmten Messzeitpunkte (tₘ₁, tₘ₂, tₘ₃, tₘ₄) regelmäßige Abstände aufweisen.

7. Verfahren nach einem der Ansprüche 2 oder 3, **dadurch gekennzeichnet, dass** die Messgröße (Xₘₑₛₛ) kontinuierlich gemessen und an die Rechnereinheit (20) übergeben wird.

8. verfahren nach einem der Ansprüche 2 oder 3, **dadurch gekennzeichnet, dass** der in den Speicher (22) der Rechnereinheit (20) abgelegte Referenzwert (X_{ref}) in Abhängigkeit von einer sich auf den Motorstrom (I) auswirkenden Einflussgröße nachgeführt wird.

9. Verfahren nach Anspruch 8, **dadurch gekennzeichnet, dass** die sich auf den Motorstrom (I) auswirkenden Einflussgröße eine Motorversorgungsspannung (U_{B}) und/oder eine Umgebungstemperatur (Tᵤ) ist.

10. Verfahren nach einem der vorhergehenden Ansprüche, **dadurch gekennzeichnet, dass** von der Rechnereinheit (20) eine Blockierung erkannt wird, wenn die induzierte Spannung (U) den vorgegebenen Schwellwert (Uₜₕ) unterschreitet.

11. Vorrichtung zur Blockiererkennung eines Gleichstrommotors (10), insbesondere eines Gleichstrommotors (10) für ein Gebläse eines Kraftfahrzeugs, mit einem Schaltmittel (18) zur Aktivierung oder zur Deaktivierung des Gleichstrommotors (10), mit einer Messvorrichtung (16) zur Messung einer Messgröße (Xₘₑₛₛ) und mit einer Rechnereinheit (20) zur Erkennung der Blockierung unter Zuhilfenahme der Messgröße (Xₘₑₛₛ) und einer zusätzlich gemessenen, induzierten Spannung (U) des Gleichstrommotors (10) sowie zur Aktivierung oder Deaktivierung des Cleichstrommotors (10) mittels des Schaltmittels (18), **gekennzeichnet dadurch dass** die Vorrichtung für das Verfahren nach einem der Ansprüche 1 bis 10 eingerichtet ist.

12. Vorrichtung nach Anspruch 11, **dadurch gekennzeichnet, dass** das Schaltmittel (18) ein MOSFET ist.

13. Vorrichtung nach Anspruch 11, **dadurch gekennzeichnet, dass** die Messvorrichtung (16) ein Vorwiderstand ist.

## Claims

1. Method for detecting a blockage of a DC motor (10), in particular of a DC motor (10) for a blower of a motor vehicle, wherein the DC motor (10) is deactivated for a defined time period (T_{off}) by a computer unit (20) using a switching means (18), within the defined time period (T_{off}) an induced voltage (U) of the DC motor (10) is measured at at least one subsequent time (tₐ, t_{b}) and is transferred to the computer unit (20), and the DC motor (10) remains deactivated if the induced voltage (U) drops below a predefined threshold value (Uₜₕ) or the DC motor (10) is activated again if the induced voltage (U) of the DC motor (10) does not drop below the predefined threshold value (Uₜₕ), **characterized in that** after renewed activation of the DC motor (10) a measurement variable (Xₘₑₐₛ) which is dependent on a motor current (I) and is measured by means of a measuring device (16) is transferred to the computer unit (20) and is stored in a memory (22) of the computer unit (20) as a reference value (X_{ref}).

2. Method according to Claim 1, **characterized in that** the measuring device (16) measures the measurement variable (Xₘₑₐₛ) during the operation of the DC motor (10) and transfers it to the computer unit (20) for a comparison with the reference value (X_{ref}) stored in the memory (22).

3. Method according to Claim 2, **characterized in that** the DC motor (10) is again deactivated for the defined time period (T_{off}) by the computer unit (20) using the switching means (18) if the measured measurement variable (Xₘₑₐₛ) deviates from the reference value (X_{ref}) previously stored in the memory (22) of the computer unit (20) by more than a definable tolerance value, within the defined time period (T_{off}) the induced voltage (U) of the DC motor (10) is measured again at a subsequent time (t_{b}) and is transferred to the computer unit (20), and the DC motor (10) remains deactivated if the measured, induced voltage (U) drops below the predefined threshold value (Uₜₕ) or the DC motor (10) is activated again if the measured, induced voltage (U) does not drop below the predefined threshold value (Uₜₕ), with the result that the described measuring process can be repeated continuously.

4. Method according to Claim 3, **characterized in that** the definable tolerance value is a factor (P).

5. Method according to one of Claims 2 or 3, **characterized in that** the measurement variable (Xₘₑₐₛ) is measured at specific measuring times (tₘ₁, tₘ₂, tₘ₃, tₘ₄) and transferred to the computer unit (20).

6. Method according to Claim 5, **characterized in that** the certain measuring times (tₘ₁, tₘ₂, tₘ₃, tₘ₄) have regular intervals.

7. Method according to one of Claims 2 or 3, **characterized in that** the measurement variable (Xₘₑₐₛ) is measured continuously and transferred to the computer unit (20).

8. Method according to one of Claims 2 or 3, **characterized in that** the reference value (X_{ref}) stored in the memory (22) of the computer unit (20) is adjusted as a function of an influencing variable which acts on the motor current (I).

9. Method according to Claim 8 **characterized in that** the influencing variable which acts on the motor current (I) is a motor supply voltage (U_{B}) and/or an ambient temperature (T_{U}).

10. Method according to one of the preceding claims, **characterized in that** the computer unit (20) detects a blockage if the induced voltage (U) drops below the predefined threshold value (Uₜₕ).

11. Device for detecting a blockage of a DC motor (10), in particular of a DC motor (10) for a blower of a motor vehicle, having a switching means (18) for activating or deactivating the DC motor (10), having a measuring device (16) for measuring a measurement variable (Xₘₑₐₛ) and having a computer unit (20) for detecting the blockage with the aid of the measurement variable (Xₘₑₐₛ) and an additionally measured, induced voltage (U) of the DC motor (10), and for activating or deactivating the DC motor (10) by means of the switching means (18), **characterized in that** the device is configured for the method according to one of Claims 1 to 10.

12. Device according to Claim 11, **characterized in that** the switching means (18) is a MOSFET.

13. Device according to Claim 11, **characterized in that** the measuring device (16) is a series resistor.

## Revendications

1. Procédé de détection du blocage d'un moteur (10) à courant continu, en particulier d'un moteur (10) à courant continu du ventilateur d'un véhicule automobile,
le moteur (10) à courant continu étant désactivé par une unité de calcul (20) à l'aide d'un moyen de commutation (18) pendant une durée (T_{off}) définie,
une tension induite (U) du moteur (10) à courant continu étant mesurée en au moins un instant ultérieur (tₐ, t_{b}) pendant la durée (T_{off}) définie et étant transmise à l'unité de calcul (20),
le moteur (10) à courant continu restant désactivé lorsque la tension induite (U) n'atteint pas une valeur de seuil (Uₜₕ) prédéterminée et le moteur (10) à courant continu étant réactivé lorsque la tension induite (U) du moteur (10) à courant continu n'est pas en deçà de la valeur de seuil (Uₜₕ) prédéterminée,
**caractérisé en ce que**
après réactivation du moteur (10) à courant continu, une grandeur de mesure (Xₘₑₛₛ) indépendante du courant (I) du moteur et mesurée au moyen d'un dispositif de mesure (16) est transmise à l'unité de calcul (20) et est conservée dans une mémoire (22) de l'unité de calcul (20) en tant que valeur de référence (X_{ref}).

2. Procédé selon la revendication 1, **caractérisé en ce que** le dispositif de mesure (16) mesure la grandeur de mesure (Xₘₑₛₛ) pendant que le moteur (10) à courant continu fonctionne et la transmet à l'unité de calcul (20) pour la comparer à la valeur de référence (X_{ref}) conservée dans la mémoire (22).

3. Procédé selon la revendication 2, **caractérisé en ce que** le moteur (10) à courant continu est désactivé de nouveau pendant une durée définie (T_{off}) par l'unité de calcul (20) à l'aide du moyen de commutation (18) lorsque la grandeur de mesure (Xₘₑₛₛ) mesurée s'écarte de la valeur de référence (X_{ref}) conservée précédemment dans la mémoire (22) de l'unité de calcul (20) de plus d'une valeur de tolérance définie, **en ce que** la tension (U) induite du moteur (10) à courant continu est de nouveau mesurée à un instant ultérieur (t_{b}) situé à l'intérieur de la durée (T_{off}) définie et est transmise à l'unité de calcul (20), le moteur (10) à courant continu restant désactivé si la tension induite (U) mesurée n'atteint pas la valeur de seuil (Uₜₕ) prédéterminée et le moteur (10) à courant continu étant réactivé lorsque la tension induite (U) mesurée n'est pas en deçà de la valeur de seuil (Uₜₕ) prédéterminée, de telle sorte que l'opération de mesure que l'on vient de décrire puisse être répétée en permanence.

4. Procédé selon la revendication 3, **caractérisé en ce que** la valeur de tolérance définie est un facteur (P).

5. Procédé selon l'une des revendications 2 ou 3, **caractérisé en ce que** la grandeur de mesure (Xₘₑₛₛ) est mesurée à certains instants de mesure (tₘ₁, tₘ₂, tₘ₃, tₘ₄) et est transmise à l'unité de calcul (20).

6. Procédé selon la revendication 5, **caractérisé en ce que** les instants définis de mesure (tₘ₁, tₘ₂, tₘ₃, tₘ₄) présentent des intervalles réguliers.

7. Procédé selon l'une des revendications 2 ou 3, **caractérisé en ce que** la grandeur de mesure (Xₘₑₛₛ) est mesurée en continu et est transmise en continu à l'unité de calcul (20).

8. Procédé selon l'une des revendications 2 ou 3, **caractérisé en ce que** la valeur de référence (X_{ref}) conservée dans la mémoire (22) de l'unité de calcul (20) est suivie en fonction d'une grandeur qui agit sur le courant (I) du moteur.

9. Procédé selon la revendication 8, **caractérisé en ce que** la grandeur qui agit sur le courant (I) du moteur est la tension d'alimentation (U_{b}) du moteur et/ou la température ambiante (T_{U}).

10. Procédé selon l'une des revendications précédentes, **caractérisé en ce que** l'unité de calcul (20) détecte un blocage lorsque la tension induite (U) n'atteint pas la valeur de seuil (Uₜₕ) prédéterminée.

11. Dispositif de détection du blocage d'un moteur (10) à courant continu, en particulier d'un moteur (10) à courant continu du ventilateur d'un véhicule automobile, le dispositif présentant
un moyen de commutation (18) qui active ou désactive le moteur (10) à courant continu,
un dispositif de mesure (16) qui mesure une grandeur de mesure (Xₘₑₛₛ) et
une unité de calcul (20) qui détecte le blocage à l'aide de la grandeur de mesure (Xₘₑₛₛ) et d'une tension induite (U) du moteur (10) à courant continu mesurée en supplément,
l'unité de calcul activant ou désactivant le moteur (10) à courant continu au moyen du moyen de commutation (18),
**caractérisé en ce que**
le dispositif est conçu pour exécuter le procédé selon l'une des revendications 1 à 10.

12. Dispositif selon la revendication 11, **caractérisé en ce que** le moyen de commutation (18) est un MOSFET.

13. Dispositif selon la revendication 11, **caractérisé en ce que** le dispositif de mesure (16) est une pré-résistance.
